# EUROPEAN PATENT SPECIFICATION

(11) **EP 3 585 052 B1**
(45) Date of publication and mention of the grant of the patent: **03.04.2024**
(21) Application number: 18754005.9
(22) Date of filing: 06.02.2018
(51) Int. Cl.: G06V 10/25, G06V 20/40, G06V 20/52, H04N 7/18

(54) **IMAGE IDENTIFICATION METHOD, DEVICE, APPARATUS, AND DATA STORAGE MEDIUM**
BILDIDENTIFIKATIONSVERFAHREN, VORRICHTUNG, EINRICHTUNG UND DATENSPEICHERMEDIUM
PROCÉDÉ, DISPOSITIF, ET APPAREIL D'IDENTIFICATION D'IMAGE, ET SUPPORT DE STOCKAGE DE DONNÉES

(30) Priority: 15.02.2017 CN 201710081274
(43) Date of publication of application: 25.12.2019
(73) Proprietor: Tencent Technology (Shenzhen) Company Limited, Shenzhen, Guangdong, 518057 (CN)
(72) Inventor: WANG, Dafeng, Shenzhen Guangdong 518057 (CN)
(74) Representative: Eisenführ Speiser
(86) International application number: PCT/CN2018/075379
(87) International publication number: WO 2018/149322

(56) References cited:
- WO-A2-2016/025485
- CN-A- 1 722 825
- CN-A- 103 327 306
- CN-A- 103 646 257
- CN-A- 103 686 074
- JP-A- 2014 036 414
- US-A1- 2009 297 023
- US-A1- 2012 288 198
- US-A1- 2015 199 032

## Description

### RELATED APPLICATION

This application claims priority to Chinese Patent Application No. 201710081274.1, entitled "IMAGE RECOGNITION METHOD AND APPARATUS" and filed with the Chinese Patent Office on February 15, 2017.

### FIELD OF THE TECHNOLOGY

This application relates to the field of video monitoring technologies, and in particular, to an image recognition method, device, apparatus and storage medium.

### BACKGROUND OF THE DISCLOSURE

With the continuous development of video monitoring technologies, an increasing quantity of monitoring devices, for example, cameras, are mounted in public places. Manual recognition can no longer meet a requirement of timely and effective monitoring over monitored images photographed by the monitoring devices.

In the related art, to reduce labor costs and improve timeliness and accuracy for performing recognition on monitored images, various monitoring systems can automatically recognize a monitored image photographed by a monitoring device nowadays. Specifically, a monitoring system recognizes, frame by frame based on a pre-determined recognition algorithm, the whole region of a monitored image photographed by a monitoring device, such that a specified event, for example, an event including a person or an object that meets a specified requirement, or an event in which a specified behavior happens, can be recognized from the monitored image in time.

In the related art, the monitoring system needs to perform a relatively large calculation amount and thus has a relatively high requirement on hardware since the whole region of the monitored image photographed by the monitoring device are to be recognized. The relatively large calculation amount results in relatively high power consumption.

In US 2015/0199032 A1, methods and apparatus to monitor environments are described. According to these methods, a focused 2D recognition analysis is executed based on obtained location information.

### SUMMARY

To address the issues of a relatively large calculation amount of a monitoring system, a relatively high hardware requirement on the monitoring system, and relatively high power consumption in the related art, the invention provides an image recognition method according to claim 1, an apparatus according to claim 4 and storage medium according to claim 8.

The technical solutions provided in this application may include the following beneficial effects.

The recognition device recognize and then analyzes the coordinates indicative of the specified event included in the recognition record of the monitored image photographed by the monitoring device, so as to determine the monitored region that needs to be recognized for the subsequent photographed monitored images. Therefore, only the determined monitored region needs to be recognized when performing recognition on the monitored images subsequently photographed by the monitoring device. The to-be-recognized image area can be reduced, thereby reducing the calculation amount of the image recognition, the hardware requirement and the power consumption of the monitoring system.

It should be understood that, the foregoing general descriptions and the following detailed descriptions are merely for illustration and explanation purposes and are not intended to limit this application.

### BRIEF DESCRIPTION OF THE DRAWINGS

The accompanying drawings, which are incorporated in the specification and constitute a part of this specification, illustrate embodiments according to this application. The principles of this application are described in conjunction with the specification.
FIG. 1 is a schematic structural diagram of a monitoring system according to an embodiment of this application;
FIG. 2 is a flowchart of an image recognition method according to an exemplary embodiment;
FIG. 3 is a schematic diagram showing coordinates in the embodiment of FIG. 2;
FIG. 4 is a schematic diagram showing a monitored region in the embodiment of FIG. 2;
FIG. 5 is an implementation flow of the solution in the embodiment of FIG. 2;
FIG. 6 is a flowchart of an image recognition method according to an embodiment;
FIG. 7 is a schematic diagram of a region in the embodiment of FIG. 6;
FIG. 8 is a structural block diagram of an image recognition apparatus according to an exemplary embodiment; and
FIG. 9 is a schematic structural diagram of a device according to an exemplary embodiment.

### DESCRIPTION OF EMBODIMENTS

Exemplary embodiments are described in detail herein, and examples of the exemplary embodiments are shown in the accompanying drawings. When the following descriptions relate to the accompanying drawings, unless indicated otherwise, same numbers in different accompanying drawings represent same or similar elements. The implementations described in the following exemplary embodiments do not represent all implementations consistent with this application. On the contrary, the implementations are merely examples of apparatuses and methods that are described in detail in the appended claims and that are consistent with some aspects of this application.

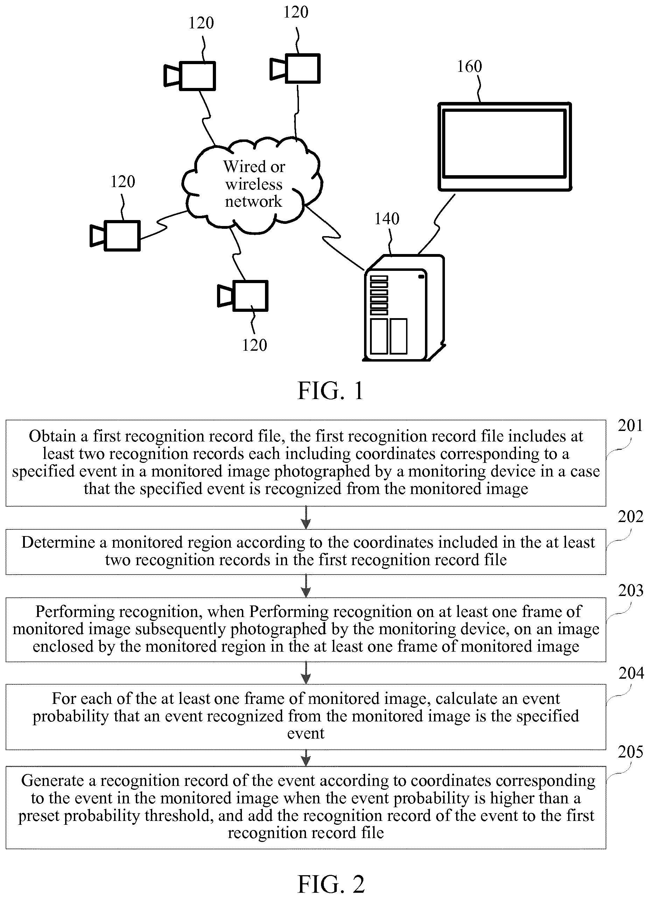

FIG. 1 is a schematic structural diagram of a monitoring system according to an embodiment of this application. The system includes: multiple monitoring devices 120 and a recognition device 140.

The monitoring device 120 may be a dedicated monitoring camera, or another electronic device (for example, a smartphone or a tablet computer) that includes a camera. The recognition device 140 may be a general-purpose computer or a server.

The monitoring device 120 and the recognition device 140 are connected by using a wired or wireless network. The monitoring device 120 may send a photographed monitored image to the recognition device 140 in real time by using the wired or wireless network, and the recognition device 140 performs recognition, based on a pre-determined recognition algorithm, on the monitored image photographed by the monitoring device 120.

The system may further include a graphic display device 160 connected to the recognition device 140. For example, the graphic display device 160 may be a display. When recognizing a monitored image, the recognition device 140 may display both the monitored image and a recognition result of the monitored image on the graphic display device 160.

In another possible implementation, the monitoring device 120 and the recognition device 140 may be different components of the same electronic device. For example, the monitoring device 120 may be a camera in the electronic device, the recognition device 140 may be a processing component having a processing function (including a processor, a memory, and the like) in the electronic device, and the monitoring device 120 and the recognition device 140 are connected via a communications bus in the electronic device.

In the solution in this embodiment of this application, in the process of recognizing the monitored image photographed by the monitoring device 120, the recognition device 140 first obtains a first recognition record file of the monitoring device, where the first recognition record file includes at least two recognition records, each recognition record of the at least two recognition records includes coordinates indicative of the monitored image photographed by the monitoring device 120, the coordinates of the monitored image corresponds to a specified event in a case that the specified event is recognized from the monitored image. The recognition device 140 determines a monitored region based on the coordinates included in the at least two recognition records in the first recognition record file, the monitored region being a part of region of the whole monitored image photographed by the monitoring device. The recognition device 140 performs recognition, when performing recognition on at least one frame of monitored image subsequently photographed by the monitoring device, on an image located in the monitored region in the at least one frame of monitored image.

According to the solution in this embodiment of this application, the recognition device 140 may recognize and then analyze the coordinates indicative of the specified event included in the recognition record of the monitored image photographed by the monitoring device 120, so as to determine the monitored region that needs to be recognized for the subsequent photographed monitored images. Therefore, only the determined monitored region needs to be recognized when performing recognition on the monitored image subsequently photographed by the monitoring device 120. For example, at a time instant, the recognition device 140 analyzes recognition records of monitored images photographed by the monitoring device 120 before the time instant, recognizes the specified events based on the recognition records and determines a part of region, in which the specified events are relatively centralized in the monitored image, as the monitored region. For the subsequent time instant, when performing recognition on the specified event in a new monitored image photographed by the monitoring device 120, the recognition device 140 only performs recognition on the monitored region in the new monitored image without recognizing images of other regions outside the monitored region in the new monitored image. Compared with the solution in which the whole monitored image is recognized, the solution in this embodiment of this application can reduce a to-be-recognized image area, and reduce a calculation amount of the image recognition when the same recognition algorithm is used, thereby lowering a hardware requirement on a monitoring system and reducing power consumption.

FIG. 2 is a flowchart of an image recognition method according to an exemplary embodiment. The method may be applied to the recognition device 140 in the monitoring system shown in FIG. 1. The image recognition method may include the following steps S201 to S205.

In Step 201, a first recognition record file is obtained, where the first recognition record file includes at least two recognition records each including coordinates indicative of a specified event in a monitored image photographed by a monitoring device in a case that the specified event is recognized from the monitored image.

The first recognition record file is a file that includes at least two recognition records. Each recognition record includes one or more set of coordinates. The coordinates are coordinates indicative of the specified event in a monitored image corresponding to the recognition record, where the specified event is recognized by the recognition device from the monitored image corresponding to the recognition record.

The specified event may be that a specified person or object appears in the monitored image. For example, assuming that the recognition device needs to recognize a person wearing black coat, or a black vehicle in the monitoring device, the specified event may be that a person wearing black coat or a black vehicle appears in the monitored image. For another example, assuming that the recognition device needs to recognize a traffic accident, the specified event may be a traffic accident event.

In this embodiment of this application, one specified event recognized by the recognition device may correspond to only one set of coordinates. For example, the coordinates corresponding to the specified event may be coordinates of a center of a region in which the specified event occurs in the monitored image. Specifically, when the specified event is a traffic accident event, the coordinates corresponding to the specified event may be coordinates of a center of a region in which the traffic accident occurs. Alternatively, the coordinates corresponding to the specified event may be coordinates of a particular position of an object related to the specified event. For example, when the specified event is that a person appears, the coordinates corresponding to the specified event may be coordinates of a center of a head of the person.

In another possible implementation, one specified event may alternatively correspond to a plurality of sets of coordinates. For example, the coordinates corresponding to the specified event may be coordinates of a plurality of particular positions of an object related to the specified event. In a case that the specified event is that a person appears, the coordinates corresponding to the specified event may be coordinates of a center of the head of the person and coordinates of a center of the body of the person.

The foregoing coordinates may be pixel coordinates corresponding to a resolution of the monitored image, or may be size coordinates corresponding to a size of the monitored image.

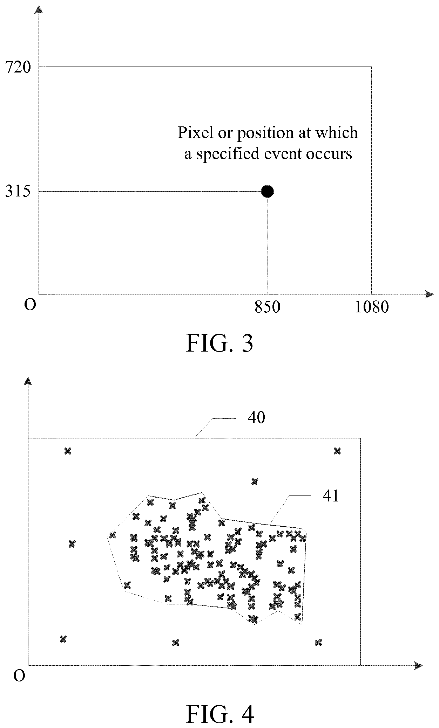

For example, FIG. 3 is a schematic diagram showing coordinates according to this embodiment of this application. As shown in FIG. 3, a resolution of a monitored image photographed by the monitoring device is 1080*720, and a coordinate system is established by using a lower left corner of the monitored image as an origin, a lower boundary of the monitored image as a lateral axis, and a left boundary of the monitored image as a longitudinal axis. Assuming that a pixel at which a specified event occurs in a frame of monitored image photographed by the monitoring device is the 850^{th} pixel starting from the left boundary of the monitored image, and the 315^{th} pixel starting from the lower boundary of the monitored image, the coordinates of the specified event may be set as (850, 315).

Alternatively, in FIG. 3, a size of a monitored image photographed by the monitoring device is 1080 mm*720 mm, a coordinate system is established by using a lower left corner of the monitored image as an origin, a lower boundary of the monitored image as a lateral axis, and a left boundary of the monitored image as a longitudinal axis. Assuming that a position, at which a specified event occurs in a frame of monitored image photographed by the monitoring device, has a distance of 850 mm to the left boundary of the monitored image, and has a distance of 315 mm to the left boundary of the monitored image, the coordinates of the specified event may be set as (850, 315).

In Step 202, a monitored region is determined based on the coordinates included in the at least two recognition records in the first recognition record file.

The monitored region may be a part of region of the monitored image photographed by the monitoring device. In this embodiment of this application, the recognition device may determine, based on historical monitoring records of the monitored images photographed by the monitoring device, a region in which the coordinates corresponding to the recognized specified event is relatively centralized in the monitored image as the monitored region.

In an embodiment, the recognition device may determine target coordinates from the coordinates included in the at least two recognition records in the first recognition record file, where the target coordinates are coordinates whose confidence level is higher than a preset confidence level threshold, and the confidence level indicative of a probability of recognizing the specified event again at the corresponding coordinates; and determine a smallest region surrounding the target coordinates as the monitored region.

In an embodiment, the determining target coordinates whose confidence level is higher than the preset confidence level threshold may be performing by using a probabilistic method. Specifically, for example, when determining the target coordinates, the recognition device may calculate a standard deviation of the coordinates included in the at least two recognition records in the first recognition record file; generate, based on the standard deviation, a two-dimensional normal distribution formula (the two-dimensional normal distribution formula represents an axisymmetric bell curved surface in a space coordinate system) corresponding to the coordinates included in the at least two recognition records in the first recognition record file; and determine coordinates, whose confidence level is higher than the confidence level threshold in the coordinates included in the at least two recognition records in the first recognition record file, as the target coordinates based on the two-dimensional normal distribution formula and the confidence level threshold.

Optionally, when determining the smallest region surrounding the coordinates whose confidence level is higher than the confidence level threshold as the monitored region, the recognition device may determine a region enclosed by outermost coordinates of target coordinates as the monitored region.

For example, FIG. 4 is a schematic diagram of a monitored region according to this embodiment of this application. As shown in FIG. 4, a region 40 is the whole coordinate region of the monitored image. In FIG. 4, coordinates of each of "x"-shape marks corresponds to one set of coordinates included in the recognition records in the first recognition record file. The recognition device determines, by using a probabilistic method, that coordinates centralized in the middle part of the region 40 in FIG. 4 are coordinates whose confidence levels are higher than the preset confidence level threshold, and determines a region (that is, a region 41 in FIG. 4) enclosed by outermost coordinates of the coordinates whose confidence levels are higher than the preset confidence level threshold. The coordinate region corresponding to the region 41 is the determined monitored region.

In Step 203, when performing recognition on at least one frame of monitored image subsequently photographed by the monitoring device, the recognition is performs on an image located in the monitored region in the at least one frame of monitored image.

After determining the monitored region and subsequently obtaining the at least one frame of monitored image photographed by the monitoring device, the recognition only needs to be performed on a part of the whole image corresponding to the monitored region in the at least one frame of monitored image based on a pre-determined recognition algorithm, to determine whether the specified event occurs in the part of the whole image corresponding to the monitored region.

According to the solution in step 201 to step 203of this embodiment of this application, assuming that an area of a frame of monitored image photographed by the monitoring device is 100* 100, the recognition device analyzes, recognition records of monitored images photographed by the monitoring device before a time instant, and determines a part of region in the monitored image, in which the specified event recognized from the recognition record is relatively centralized, as the monitored region (assuming that the monitored region is a region having an area of 50*50 in the monitored image). When performing recognition on the specified event in a new monitored image photographed by the monitoring device after the time instant, the recognition device 140 performs recognition on only the monitored region whose area is 50*50 in the new monitored image, and does not perform recognition on images of regions other than the monitored region in the new monitored image. Compared with the solution in the related art in which the whole region of monitored image are recognized, only a part of region of the whole image needs to be recognized according to the solution in this embodiment of this application. Technical issues of a relatively large calculation amount for recognizing a monitored image, a relatively high hardware requirement and relatively large power consumption in the related art can be addressed, such that a calculation amount of the image recognition can be reduced, thereby lowering a hardware requirement on a monitoring system and reducing power consumption.

When performing recognition on a part of the subsequent monitored image based on the determined monitored region, the recognition device may further update the first recognition record file. Correspondingly, this embodiment of this application may further include the following steps 204 and 205.

In Step 204, for each of the at least one frame of monitored image, an event probability that an event recognized from the monitored image is the specified event is calculated.

When recognizing the part of image corresponding to the monitored region in the monitored image based on the pre-determined recognition algorithm, the monitoring device may calculate an event probability that the recognized event is the specified event.

Specifically, for example, assuming that the specified event is an event that a person wearing a white hunting cap, a leather jacket, black pants and black leather shoes appears, the monitoring device may compare clothing features of each person appearing in a currently recognized monitored image with the clothing features of the person in the specified event, to calculate a similarity level between the dressing features of each person and the dressing features of the person in the specified event. A similarity level between the dressing features of each person and the clothing features of the person in the specified event may be regarded as the event probability. Alternatively, the event probability may be obtained based on the similarity level between the clothing features. For example, the recognition device may multiply the similarity level by a pre-determined coefficient (where the pre-determined coefficient may be a positive number close to and less than 1, for example, 0.9), and use the obtained value as the event probability. Alternatively, the recognition device may store a correspondence between an interval in which the similarity level located and the event probability. The recognition device can determine the interval in which the similarity level located after obtaining the similarity level through calculation, and further query for an event probability corresponding to the interval in which the similarity level located.

In Step 205, a recognition record of the specified event based on coordinates indicative of the event in the monitored image is generated in response to the event probability being higher than a preset probability threshold, and the recognition record of the event is added to the first recognition record file.

The probability threshold may be a percentage set according to an actual application requirement. When the event probability calculated by the recognition device in step 204 is higher than the probability threshold (for example, 95%), it may be considered that the recognized event is the specified event. In this case, the recognition device may obtain coordinates of the recognized event in the currently recognized monitored image, generate the recognition record including the coordinates, and add the generated recognition record to the first recognition record file, to update the first recognition record file in time. In this way, the recognition device may update the monitored region based on the added recognition record when a new region to-be-monitored is determined subsequently, thereby improving an accuracy of determining the monitored region.

In an actual implementation, when the recognition device receives a monitored image photographed by the recognition device for the first time after the recognition device is initially mounted, there is no recognition record in the first recognition record file. In this case, the recognition device may perform recognition on the whole region in the monitored image photographed by the recognition device, or may perform recognition based on a preset monitored region (where the preset monitored region may be a default region in the monitored image, or may be a region framed by a user or monitoring personnel) of the monitored image photographed by the recognition device. A recognition record may be generated in response to the recognition of the specified event and then the recognition record is added to the first recognition record file. Then, the recognition device may obtain the first recognition record file for each pre-determined time period (for example, one day or one week), and determine the monitored region based on the obtained first recognition record file. For each pre-determined time period, once the monitored region is determined, the recognition device performs recognition, based on the determined monitored region, for an event in a monitored image subsequently photographed by the monitoring device, generates a recognition record when recognizing the specified event and adds the recognition record to the first recognition record file, until the first recognition record file is obtained for the next predetermined time period to determine a updated monitored region. Alternatively, the recognition device may obtain the first recognition record file and determine the monitored region for each time when the recognition is to be performed on a monitored image photographed by the monitoring device, perform recognition, based on the determined monitored region, for the event in the to-be-recognized monitored image, generate a recognition record when recognizing the specified event, and add the recognition record to the first recognition record file.

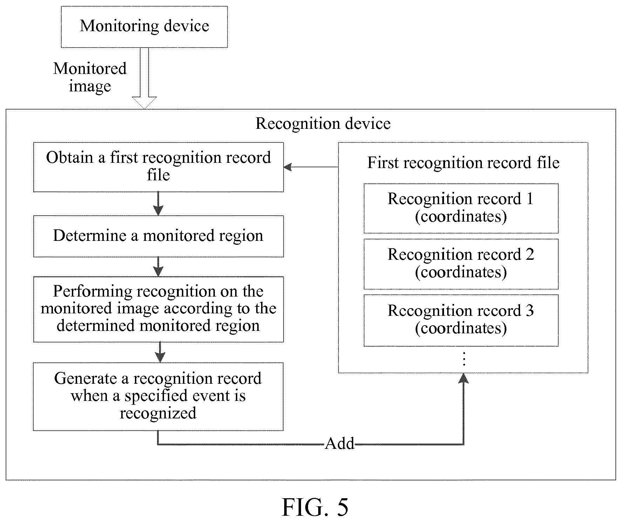

Specifically, FIG. 5 is an implementation flow of the solution according to this embodiment of this application. It is assumed that the monitoring device is a monitoring camera, and the recognition device is a monitoring server in a monitoring room. As shown in FIG. 5, the monitoring camera photographs and sends a monitored image to the monitoring server after being mounted. The monitoring server performs recognition on the whole region in the monitored image sent by the monitoring camera at initial time instant, displays both a recognition result and the monitored image on a monitoring screen (that is, the graphic display device 160 shown in FIG. 1) when recognizing the specified event. The monitoring server generates a recognition record that includes coordinates of the specified event in the monitored image, and adds the recognition record to the first recognition record file. Subsequently, the monitoring server obtains the first recognition record file in an interval of one day, and determines a monitored region based on the recognition records in the obtained first recognition record file. In the following time of the day, the monitoring server performs recognition, based on the determined monitored region, on monitored images photographed by the monitoring camera (that is, performs recognition on only a part of image located in the monitored region in the monitored image), generates a recognition record that includes coordinates of the specified event in the monitored image when recognizing the specified event, and adds the recognition record to the first recognition record file.

In view of above, according to the method shown in this embodiment of this application, the recognition device analyzes the coordinates of the recognized specified event included in the recognition records of the monitored image photographed by the monitoring device, to determine the monitored region that needs to be recognized for subsequently monitored images, so that only the determined monitored region needs to be recognized when performing recognition on monitored images subsequently photographed by the monitoring device. In such manner, the to-be-recognized image area and the calculation amount of the image recognition can be reduced, thereby lowering a hardware requirement on a monitoring system and reducing power consumption.

In addition, according to the solution shown in this embodiment of this application, when performing recognition, based on the determined monitored region, the monitored image subsequently photographed by the monitoring device, if a probability that a recognized event is the specified event is higher than the preset threshold, the recognition device generates a recognition record based on coordinates corresponding to the recognized event and adds the recognition record to the first recognition record file, to update the first recognition record file in time. In this way, the recognition device may modify the monitored region based on the added recognition record for determining an updated monitored region subsequently, thereby improving an accuracy of the determined monitored region.

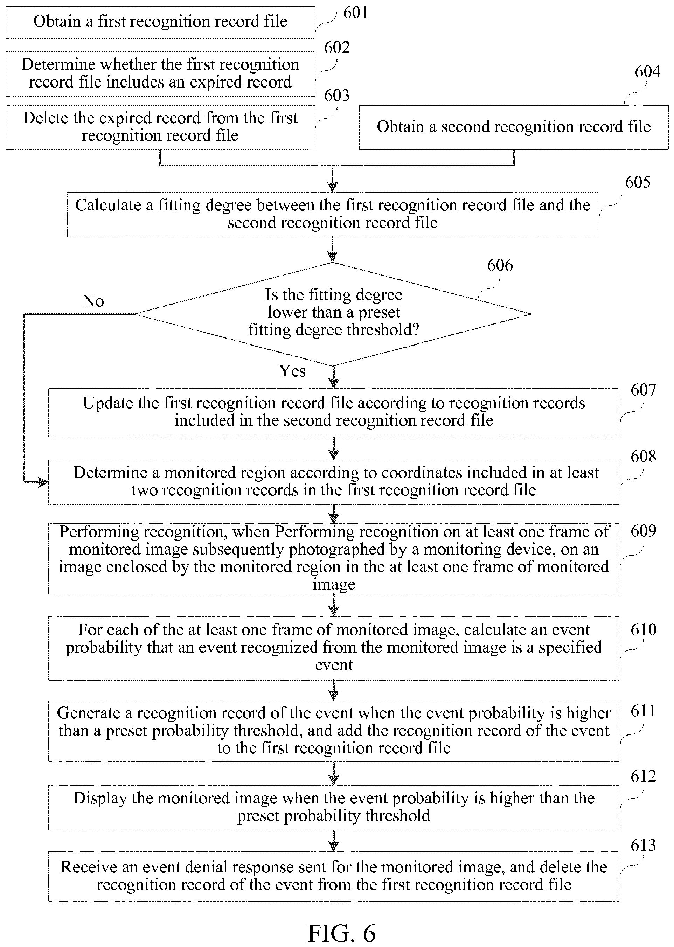

FIG. 6 is a flowchart of an image recognition method according to an embodiment. The method may be applied to the recognition device 140 in the monitoring system shown in FIG. 1. The image recognition method may include the following steps S601 to S613.

In Step 601, a first recognition record file is obtained, where the first recognition record file includes at least two recognition records each including coordinates indicative of a specified event in a monitored image photographed by a monitoring device in a case that the specified event is recognized from the monitored image.

In Step 602, whether the first recognition record file includes an expired record is determined.

The recognition record in the first recognition record file may further include corresponding recognition time in addition to the coordinates, and the expired record is a record that an interval between the corresponding recognition time and current time is greater than a preset time interval.

In an actual implementation, a region in which the recognized specified event is centralized may change as time elapses. For example, a photographing direction of the monitoring device may change at different time instant, leading to a change of the region in which the coordinates corresponding to the specified event is centralized. In addition, as time elapses, there are an increasing quantity of recognition records in the first recognition record file, and an excessive quantity of recognition records may result in a more complex calculation for determining a subsequent monitored region. Therefore, for the purpose of avoiding a case of an inaccurate subsequently determined monitored region and a more complex calculation for determining the monitored region caused by a possible change in the region in which the recognized specified event is centralized, in this embodiment of this application, the monitoring device may calculate an interval between recognition time corresponding to each of the recognition records in the first recognition record file and current time after obtaining the first recognition record file, and determine a recognition record whose interval between the recognition time and the current time is greater than the preset time interval (for example, three months or half a year) as the expired record.

In Step 603, the expired record is deleted from the first recognition record file.

After determining the expired record in the first recognition record file, the recognition device may delete the expired record from the first recognition record file, to avoid the case of an inaccurate subsequently determined monitored region and a more complex calculation for determining the monitored region caused by a possible change in the region in which the recognized specified event is centralized.

In the solution in this embodiment of this application, the recognition device further performs recognition on the whole region in a part of the monitored images photographed by the monitoring device, and update the first recognition record file based on a recognition result. Correspondingly, the embodiment of this application further includes the following steps 604 to 607.

In Step 604, a second recognition record file is obtained, where each recognition record in the second recognition record file includes coordinates indicative of the specified event in a part of the monitored images photographed by the monitoring device in a case that the specified event is recognized from the whole region of a part of the monitored images.

The some monitored images are images other than the monitored images corresponding to the recognition records in the first recognition record file.

In an actual implementation, not all of the specified events occur in the monitored region determined by the recognition device. In other words, a specified event may occur in a region other than the monitored region in the monitored image photographed by the monitoring device. To avoid a situation that some of the specified events are missed to be recognized caused by that the recognition device recognizes only the monitored region in the monitored image, in this embodiment of this application, the recognition device may extract some monitored images from all the monitored images photographed by the monitoring device, perform recognition on the whole region of the some monitored images, generate a recognition record based on coordinates indicative of the recognized specified event in the monitored image when recognizing the specified event, and add the recognition record to the second recognition record file.

In a possible implementation, when performing recognition on the monitored images photographed by the monitoring device, the recognition device may extract a particular percentage (for example, 10%) of the monitored images from all the monitored images photographed by the monitoring device, perform recognition on the whole region of the extracted monitored images and perform recognition based on the determined monitored region for the remaining monitored images.

When extracting the particular percentage of the monitored images, the recognition device may extract the particular percentage of the monitored images from all the monitored images according to a random algorithm. Alternatively, the recognition device may sample from all the monitored images according to a pre-determined sampling rate to extract the particular percentage of the monitored images. Specifically, for example, assuming that the extraction percentage is 10%, and the monitoring device photographs and sends 100 frames of monitored images, the recognition device may randomly extract 10 frames of monitored images from the 100 frames of monitored images. The recognition is performed on whole region of the extracted 10 frames of monitored images, and is performed based on the determined monitored region of the other 90 frames of monitored images. Alternatively, the monitoring device may sort the 100 frames of monitored images according to a chronological photographing order of the 100 frames of monitored images, and extract the last frame (or the second frame, the third frame, and the like) of every 10 frames of monitored images. The recognition is performed on the whole region of the extracted monitored images, and is performed based on the determined monitored region of the first to ninth frames of monitored images of every 10 frames of monitored images.

In Step 605, a fitting degree between the first recognition record file and the second recognition record file is calculated.

The fitting degree indicates a similarity level between a first region and a second region. The first region is a region corresponding to the coordinates included in the recognition records in the first recognition record file, and the second region is a region corresponding to the coordinates included in the recognition records in the second recognition record.

Specifically, in this embodiment of this application, when calculating the fitting degree between the first recognition record file and the second recognition record file, the recognition device may determine the first region corresponding to the coordinates included in the recognition records in the first recognition record file, and the second region corresponding to the coordinates included in the recognition records in the second recognition record file. Manners of determining the first region and the second region are similar to the operation of determining the monitored region in step 202. The recognition device calculates a ratio of a common area shared by the second region and the first region to a total area of the second region, and calculates the fitting degree based on the ratio of the common area to the total area of the second region. For example, the recognition device may directly use the ratio of the common area to the total area of the second region as the fitting degree between the coordinates included in the recognition records in the first recognition record file and the coordinates included in the recognition records in the second recognition record file.

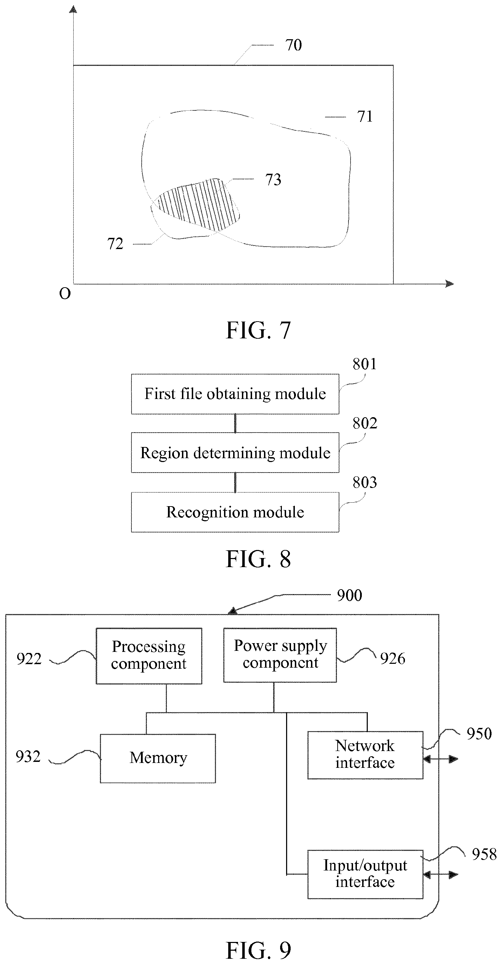

For example, FIG. 7 is a schematic diagram of a region according to this embodiment of this application. As shown in FIG. 7, a region 70 is the whole coordinate region of the monitored image, and the recognition device calculates a region 71 as the first region corresponding to the coordinates included in the recognition records in the first recognition record file, and calculates a region 72 as the second region corresponding to the coordinates included in the recognition records in the second recognition record file. A common region shared by the region 71 and the region 72 is a region 73 (that is, a slanting line part in FIG. 7). The recognition device may calculate a ratio of an area of the region 73 to an area of the region 72, and a calculation result may be set as the fitting degree between the coordinates included in the recognition records in the first recognition record file and the coordinates included in the recognition records in the second recognition record file.

Optionally, each recognition record in the second recognition record file may further include a corresponding recognition time. Before calculating the coordinates included in the recognition records in the first recognition record file and the coordinates included in the recognition records in the second recognition record file, the recognition device may further determine an expired record in the second recognition record file, and delete the expired record from the second recognition record file.

In Step 606, whether the fitting degree is lower than a preset fitting degree threshold is determined; and if the fitting degree is lower than the preset fitting degree threshold, the method proceeds to step 607; otherwise, the method proceeds to step 608.

The fitting degree threshold may be a preset percentage or a percentage set according to an actual application requirement. For example, taking the case in which the ratio of the common area to the total area of the second region is the fitting degree as an example, when the ratio of the common area to the total area of the second region is not less than the preset fitting degree threshold (for example, 98%), a probability that the specified event occurs in a region other than the monitored region in the monitored image photographed by the monitoring device may be determined as relatively low. In this case, step 608 may be performed. On the contrary, if the ratio of the common area to the total area of the second region is less than the preset fitting degree threshold, the probability that the specified event occurs in a region other than the monitored region in the monitored image photographed by the monitoring device is determined as relatively high. In this case, step 607 should be performed before performing step 608.

In Step 607, the first recognition record file is updated based on the recognition records included in the second recognition record file.

In this embodiment of this application, when the fitting degree between the coordinates included in the recognition records in the first recognition record file and the coordinates included in the recognition records in the second recognition record file is lower than the preset fitting degree threshold, the recognition device may update the first recognition record file, to update the monitored region in time. Specifically, when updating the first recognition record file, the recognition device may add all the recognition records in the second recognition record file to the first recognition record file. Alternatively, the recognition device may only add a recognition record, whose coordinates are located out of the common area, of recognition records in the second recognition record file to the first recognition record file.

The interval between the recognition time corresponding to the recognition records in the second recognition record file and current time is located within a preset time interval (for example, within a week or a month). When determining whether the recognition records in the second recognition record file is needed to be added to the first recognition record file, the recognition device may not calculate the fitting degree between the first recognition record file and the second recognition record file directly. Instead, the recognition device may calculate, whether a quantity of coordinates that are located out of the first region and that are in the coordinates included in the recognition records in the second recognition record file is greater than a preset quantity threshold after determining the first region corresponding to the coordinates included in the recognition records in the first recognition record file and the second region corresponding to the coordinates included in the recognition records in the second recognition record file. If the quantity of coordinates that are located out of the first region and that are in the coordinates included in the recognition records in the second recognition record file is greater than the preset quantity threshold, the recognition records in the second recognition record file are determined, by the recognition device, to be added to the first recognition record file, so as to update the monitored region determined based on the first recognition record file. The quantity threshold may be preset by a developer or maintenance personnel.

In Step 608, a monitored region is determined based on the coordinates included in the at least two recognition records in the first recognition record file.

In Step 609, when performing recognition on at least one frame of monitored image subsequently photographed by the monitoring device, the recognition is performed on an image located in the monitored region in the at least one frame of monitored image.

When performing recognition, based on the determined monitored region, on a part of the subsequent monitored images, the recognition device further updates the first recognition record file. Correspondingly, the embodiment of this application further includes the following steps 610 and 611.

In Step 610, for each of the at least one frame of monitored image, an event probability that an event recognized from the monitored image is the specified event is calculated.

In Step 611, a recognition record of the event is generated based on coordinates indicative of the event in the monitored image in response to the event probability being higher than a preset probability threshold, and the recognition record of the event is added to the first recognition record file

The details of step 608 to step 611 may refer to the description of step 202 to step 205 in the embodiment of FIG. 2, which are not repeated herein.

Optionally, in the solution in this embodiment of this application, after a recognition record of a recognized event is added to the first recognition record file, a user may further delete a recognition record from the first recognition record file when the user determines that the corresponding recognized event is not the specified event. Correspondingly, this embodiment of this application may further include step 612 and step 613.

In Step 612, the monitored image is displayed when the event probability is higher than the preset probability threshold.

In this embodiment of this application, when the recognition device detects that an event probability of an event is higher than the preset probability threshold, the detected event may be determined as the specified event. In this case, the monitored image corresponding to the recognized event may be displayed, and the user or the monitoring personnel determines whether the specified event actually occurs.

In Step 613, an event denial response sent for the monitored image is received, where the event denial response is indicative of that the event is not the specified event; and the recognition record of the event is deleted from the first recognition record file.

When determining, based on the presented monitored image, that the specified event does not occur, the user or the monitoring personnel may send an event denial response based on the displayed monitored image. In this case, the recognition device deletes the recognition record of the event from the first recognition record file, to prevent an incorrect recognition result from affecting an accuracy of subsequently determining the monitored region.

Specifically, it is assumed that the monitoring device is a monitoring camera, and the recognition device is a monitoring server in a monitoring room. The monitoring camera photographs and sends a monitored image to the monitoring server after being mounted.

In the first day after the monitoring camera is mounted, the monitoring server performs recognition, for the first time, on the whole region of monitored images sent by the monitoring camera. When recognizing a specified event, the monitoring server displays both a recognition result and the monitored image on a monitoring screen, generates a recognition record that includes coordinates of the specified event in the monitored image and a recognition time, and adds the recognition record to the first recognition record file.

In the second day after the monitoring camera is mounted, the monitoring server obtains the first recognition record file, and determines a monitored region based on the recognition records in the obtained first recognition record file. For every 10 frames of monitored images photographed by the monitoring camera, the recognition device performs recognition, based on the determined monitored region, on the first to ninth frames of monitored images a, and performs recognition on the whole region of the last frame of the 10 frames of monitored images. In case of recognizing the specified event from the first to the ninth frames of monitored images, the recognition device generates a recognition record that includes coordinates of the specified event and a recognition time, and adds the recognition record to the first recognition record file. In case of recognizing the specified event from the last frame of the 10 frames of monitored images, the recognition device generates a recognition record that includes coordinates of the specified event and a recognition time, and adds the recognition record to the second recognition record file.

Subsequently, the monitoring server obtains the first recognition record file and the second recognition record file in an interval of one day. The monitoring server deletes expired records from the first recognition record file and the second recognition record file based on recognition time, and then calculates a fitting degree between the coordinates included in the recognition records in the first recognition record file and the coordinates included in the recognition records in the second recognition record file. When the fitting degree between the coordinates included in the recognition records in the first recognition record file and the coordinates included in the recognition records in the second recognition record file is not less than the preset fitting degree threshold, the recognition device determines the monitored region based on the recognition records in the obtained first recognition record file. When the fitting degree between the coordinates included in the recognition records in the first recognition record file and the coordinates included in the recognition records in the second recognition record file is less than the preset fitting degree threshold, the recognition device adds the recognition records in the second recognition record file to the first recognition record file, and determines the monitored region based on the first recognition record file to which the recognition record is added. After determining the monitored region, for every 10 frames of monitored images photographed by the monitoring camera, the recognition device performs recognition, based on the determined monitored region, on the first to ninth frames of monitored images and performs recognition on the whole region of the last frame of monitored images. In case of recognizing the specified event from the first to ninth frames of the monitored images, the recognition device generates a recognition record that includes coordinates indicative of the specified event, and adds the recognition record to the first recognition record file. In case of recognizing the specified event from the last frame of the monitored image, the recognition device generates a recognition record that includes coordinates indicative of the specified event, and adds the recognition record to the second recognition record file.

In view of the above, according to the method in this embodiment of this application, the recognition device analyzes the coordinates indicative of the recognized specified event included in the recognition records of the monitored image photographed by the monitoring device, to determine the monitored region that needs to be subsequently recognized, so that the recognition only needs to be performed on the determined monitored region when performing recognition on a monitored image subsequently photographed by the monitoring device. A to-be-recognized image area and a calculation amount of the image recognition can be reduced, thereby lowering a hardware requirement on a monitoring system and reducing power consumption.

In addition, according to the solution in this embodiment of this application, when performing recognition, based on the determined monitored region, on the monitored image subsequently photographed by the monitoring device, if the probability that a recognized event is the specified event is higher than the preset threshold, the recognition device generates a recognition record based on coordinates corresponding to the recognized event and adds the recognition record to the first recognition record file, to update the first recognition record file in time. In this way, the recognition device can update the monitored region based on the added recognition record in a process that the monitored region is subsequently determined, thereby improving an accuracy of determining the monitored region.

In addition, according to the method in this embodiment of this application, before determining the monitored region based on the first recognition record file, the recognition device deletes the expired record from the first recognition record file, to avoid a case of an inaccurate subsequently determined monitored region and a complex calculation for determining the monitored region caused by a possible change in the region in which the recognized specified event is centralized.

In addition, according to the method in this embodiment of this application, before determining the monitored region based on the first recognition record file, the recognition device further calculates the fitting degree between the first recognition record file and the second recognition record file, and updates the first recognition record file based on the recognition records in the second recognition record file when the fitting degree is lower than the fitting degree threshold, thereby updating the monitored region determined based on the first recognition record file, and improving an accuracy of determining the monitored region.

FIG. 8 is a structural block diagram of an image recognition apparatus according to an exemplary embodiment. The image recognition apparatus may be applied to the monitoring device 140 disposed in the monitoring system shown in FIG. 1, to perform all or some steps in the embodiment shown in FIG. 2 or FIG. 6. The image recognition apparatus may include a first file obtaining module 801, a region determining module 802 and a recognition module 803.

The first file obtaining module 801 is configured to obtain a first recognition record file, where the first recognition record file includes at least two recognition records each including coordinates indicative of a specified event in a monitored image photographed by a monitoring device in a case that the specified event is recognized from the monitored image.

The region determining module 802 is configured to determine a monitored region based on the coordinates included in the at least two recognition records in the first recognition record file, the monitored region being a part of region of the monitored image photographed by the monitoring device.

The recognition module 803 is configured to perform recognition on an image located in the monitored region in the at least one frame of monitored image when performing recognition on the at least one frame of monitored image that is subsequently photographed by the monitoring device.

Optionally, the region determining module may include:
a coordinate determining unit, configured to determine target coordinates from the coordinates included in the at least two recognition records in the first recognition record file, the target coordinates being coordinates whose confidence level is higher than a preset confidence level threshold, and where the confidence level is indicative of a probability of recognizing the specified event again at corresponding coordinates; and
a region determining unit, configured to determine a smallest region surrounding the target coordinates as the monitored region.

Optionally, the coordinate determining unit includes:
a calculation subunit, configured to calculate a standard deviation of the coordinates included in the at least two recognition records in the first recognition record file;
a generation subunit, configured to generate, based on the standard deviation, a two-dimensional normal distribution formula corresponding to the coordinates included in the at least two recognition records in the first recognition record file; and
a coordinate determining subunit, configured to determine, based on the two-dimensional normal distribution formula and the preset confidence level threshold, coordinates, whose confidence level is higher than the preset confidence level threshold in the coordinates included in the at least two recognition records in the first recognition record file, as the target coordinates.

Optionally, the apparatus further includes:
a probability calculation module, configured to calculate an event probability that an event recognized from the monitored image is the specified event for each of the at least one frame of monitored image;
a record generation module, configured to generate a recognition record of the event based on coordinates indicative of the event in the monitored image when the event probability is higher than a preset probability threshold; and
an adding module, configured to add the recognition record of the event to the first recognition record file.

Optionally, the apparatus further includes:
a displaying module, configured to display the monitored image when the event probability is higher than the preset probability threshold;
a response receiving module, configured to receive an event denial response sent for the monitored image, the event denial response indicative of that the event is not the specified event; and
a first deletion module, configured to delete the recognition record of the event from the first recognition record file.

Optionally, each recognition record further includes corresponding recognition time, and the apparatus further includes:
a record determining module, configured to determine whether the first recognition record file includes an expired record before the monitored region is determined based on the coordinates included in the at least two recognition records in the first recognition record file, where the expired record is a record having an interval, which is between the corresponding recognition time and current time, greater than a preset time interval; and
a second deletion module, configured to delete the expired record from the first recognition record file.

Optionally, the apparatus further includes:
a second file obtaining module, configured to obtain a second recognition record file before the region determining module determines the monitored region based on the coordinates included in the at least two recognition records in the first recognition record file, where each recognition record included in the second recognition record file includes corresponding coordinates of the specified event in some of the monitored images photographed by the monitoring device, in a case that the specified event is recognized from the whole region of the some of the monitored images, and the some of the monitored images are images other than the monitored images corresponding to the recognition records in the first recognition record file;
a fitting degree calculation module, configured to calculate a fitting degree between the coordinates included in the recognition records in the first recognition record file and the coordinates included in the recognition records in the second recognition record file, the fitting degree indicative of a similarity level between a first region and a second region, where the first region is a region corresponding to the coordinates included in the recognition records in the first recognition record file, and the second region is a region corresponding to the coordinates included in the recognition records in the second recognition record; and
an update module, configured to: update the first recognition record file based on the recognition records included in the second recognition record file when the fitting degree is lower than a preset fitting degree threshold.

In view of the above, according to the apparatus in this embodiment of this application, the recognition device analyzes the coordinates indicative of the recognized specified event included in the recognition records of the monitored image photographed by the monitoring device, to determine the monitored region that needs to be subsequently recognized, so that the recognition only needs to be performed on the determined monitored region needs to be recognized when performing recognition on a monitored image subsequently photographed by the monitoring device. A to-be-recognized image area and a calculation amount of the image recognition can be reduced, thereby lowering a hardware requirement on a monitoring system and reducing power consumption.

In addition, according to the apparatus in this embodiment of this application, when performing recognition, based on the determined monitored region, on the monitored image subsequently photographed by the monitoring device, if a probability that a recognized event is the specified event is higher than the preset threshold, the recognition device generates a recognition record based on coordinates corresponding to the recognized event and adds the recognition record to the first recognition record file, to update the first recognition record file in time. In this way, the recognition device can update the monitored region based on the added recognition record in a process that the monitored region is subsequently determined, thereby improving an accuracy of determining the monitored region.

In addition, according to the apparatus in this embodiment of this application, before determining the monitored region based on the first recognition record file, the recognition device deletes the expired record from the first recognition record file, to avoid a case of an inaccurate subsequently determined monitored region and a complex calculation for determining the monitored region caused by a possible change in the region in which the recognized specified event is centralized.

In addition, according to the apparatus in this embodiment of this application, before determining the monitored region based on the first recognition record file, the recognition device further calculates the fitting degree between the first recognition record file and the second recognition record file, and updates the first recognition record file based on the recognition records in the second recognition record file when the fitting degree is lower than the fitting degree threshold, thereby updating the monitored region determined based on the first recognition record file, and improving an accuracy of determining the monitored region.

FIG. 9 is a schematic structural diagram of a device 900 according to an exemplary embodiment. For example, the device 900 may be the recognition device 140 in the monitoring system shown in FIG. 1. Referring to FIG. 9, the device 900 includes: a processing unit 922 and a memory resource, where the processing unit 922 further includes one or more processors, and the memory resource, which is represented by a memory 932, is for storing instructions such as an application that can be executed by the processing unit 922. The application stored in the memory 932 may include one or more modules each corresponding to a set of instructions. In addition, the processing unit 922 is configured to execute the instructions, to implement the foregoing image recognition method performed by the recognition device.

The device 900 may further include:
a power supply component 926, configured to manage power supply of the device 900, and
a wired or wireless network interface 950, configured to connect the device 900 to a network, and an input/output (I/O) interface 958.
An operating system stored in the memory 932, for example, Windows Server^{™}, Mac OS X^{™}, Unix^{™}, Linux^{™}, or FreeBSD^{™} may be executed by the device 900.

A non-transitory computer readable storage medium including an instruction, such as a memory including an instruction, is further provided, and the instruction may be executed by a processor of a recognition device to perform the method in the embodiments in FIG. 2 or FIG. 6 of this application. For example, the non-transitory computer readable storage medium may be a read-only memory (ROM), a random access memory (RAM), a CD-ROM, a magnetic tape, a floppy disk, an optical data storage device, or the like.

A person skilled in the art can easily figure out other possible implementations of this application after reading the specification and implementing this application that is disclosed herein.

It should be understood that this application is not limited to the precise structures described above and shown in the accompanying drawings. Various modifications and changes can be made without departing from the scope of the invention. The scope of this invention is limited only by the appended claims.

## Claims

1. An image recognition method, comprising:
obtaining (201), by a recognition device (140), a first recognition record file, wherein the first recognition record file comprises at least two recognition records each comprising coordinates indicative of a specified event in a monitored image photographed by a monitoring device (120) before a time instant in a case that the specified event is recognized from the monitored image;
after a preset time interval has elapsed, obtaining (604), by the recognition device (140), a second recognition record file, wherein each recognition record comprised in the second recognition record file comprises coordinates indicative of the specified event in a part of monitored images photographed by the monitoring device (120), in a case that the specified event is recognized from the whole coordinate regions (70) (paragraph 76) in the part of monitored images, and the part of monitored images are images other than the monitored image corresponding to the at least two recognition records in the first recognition record file;
calculating (605), by the recognition device (140), a fitting degree between the first recognition record file and the second recognition record file, the fitting degree indicative of a similarity level between a first region (71) and a second region (72), wherein the first region (71) is a region corresponding to the coordinates comprised in the at least two recognition records in the first recognition record file, and the second region (72) is a region corresponding to the coordinates comprised in the recognition records in the second recognition record file; and
updating (607), by the recognition device (140) when the fitting degree is lower than a preset fitting degree threshold, the first recognition record file based on the recognition records comprised in the second recognition record file;
determining (202), by the recognition device (140), a monitored region (41) based on the coordinates comprised in the at least two recognition records in the first recognition record file, the monitored region being a part of region of the monitored image photographed by the monitoring device (120);
performing recognition (203), by the recognition device (140) when performing recognition on at least one frame of monitored image subsequently photographed by the monitoring device after the time instant, on an image located in the monitored region (41) in the at least one frame of monitored image;
calculating, by the recognition device (140), an event probability that an event recognized from the monitored image is the specified event;
generating (205), by the recognition device (140) in response to the event probability being higher than a preset probability threshold, a recognition record of the event based on coordinates indicative of the event in the monitored image; and
including (205), by the recognition device (140), the recognition record of the event to the first recognition record file.

2. The method according to claim 1, wherein the determining (202), by the recognition device (140), a monitored region (41) according to the coordinates comprised in the at least two recognition records in the first recognition record file comprises:
determining, by the recognition device (140), target coordinates from the coordinates comprised in the at least two recognition records in the first recognition record file, the target coordinates being coordinates whose confidence level is higher than a preset confidence level threshold, and wherein the confidence level is indicative of probability of recognizing the specified event again at corresponding coordinates; and
determining, by the recognition device (140), a smallest region surrounding the target coordinates as the monitored region.

3. The method according to claim 1 or 2, wherein the at least two recognition records each further comprises a corresponding recognition time, and before the determining a monitored region based on the coordinates comprised in the at least two recognition records in the first recognition record file, the method further comprises:
determining (602), by the recognition device (140), whether the first recognition record file comprises an expired record, wherein the expired record is a record having an interval, which is between the corresponding recognition time and current time, greater than a preset time interval; and
deleting (603), by the recognition device (140), the expired record from the first recognition record file.

4. An image recognition apparatus (140), comprising:
a first file obtaining module (801), configured to obtain a first recognition record file, wherein the first recognition record file comprises at least two recognition records each comprising coordinates indicative of a specified event in a monitored image photographed by a monitoring device before a time instant, in a case that the specified event is recognized from the monitored image;
a second file obtaining module, configured to obtain, after a preset time interval has elapsed, a second recognition record file before a region determining module (802) determines the monitored region based on the coordinates comprised in the at least two recognition records in the first recognition record file; wherein each recognition record comprised in the second recognition record file comprises coordinates indicative of the specified event in a part of the monitored images photographed by the monitoring device, in a case that the specified event is recognized from the whole coordinate region (70) of the part of the monitored images, and the part of monitored images are images other than the monitored image corresponding to the at least two recognition records in the first recognition record file;
a fitting degree calculation module, configured to calculate (605) a fitting degree between the coordinates comprised in the at least two recognition records in the first recognition record file and the coordinates comprised in the recognition records in the second recognition record file, the fitting degree is indicative of a similarity level between a first region (71) and a second region (72), wherein the first region (71) is a region corresponding to the coordinates comprised in the at least two recognition records in the first recognition record file, and the second region (72) is a region corresponding to the coordinates comprised in the recognition records in the second recognition record; and
an update module, configured to: update (607) the first recognition record file based on the recognition records comprised in the second recognition record file when the fitting degree is lower than a preset fitting degree threshold;
the region determining module (802), configured to determine a monitored region based on the coordinates comprised in the at least two recognition records in the first recognition record file, the monitored region being a part of region of the monitored image photographed by the monitoring device;
a recognition module (803), configured to perform recognition on an image located in the monitored region in at least one frame of monitored image when performing recognition on the at least one frame of monitored image that is subsequently photographed by the monitoring device after the time instant;
a probability calculation module, configured to calculate an event probability that an event recognized from the monitored image is the specified event for each of the at least one frame of monitored image;
a record generation module, configured to generate (205) a recognition record of the event based on coordinates indicative of the event in the monitored image when the event probability is higher than a preset probability threshold; and
an adding module, configured to add (205) the recognition record of the event to the first recognition record file.

5. The apparatus (140) according to claim 4, wherein the region determining module (803) comprises:
a coordinate determining unit, configured to determine target coordinates from the coordinates comprised in the at least two recognition records in the first recognition record file, the target coordinates being coordinates whose confidence level is higher than a preset confidence level threshold, and wherein the confidence level is indicative of a probability of recognizing the specified event again at corresponding coordinates; and
a region determining unit, configured to determine a smallest region surrounding the target coordinates as the monitored region.

6. The apparatus according to claim 5, wherein the apparatus further comprises:
a displaying module (160), configured to display the monitored image when the event probability is higher than the preset probability threshold;
a response receiving module, configured to receive an event denial response sent for the monitored image, the event denial response is indicative of that the event is not the specified event; and
a first deletion module, configured to delete the recognition record of the event from the first recognition record file.

7. The apparatus (140) according claim 5 or 6, wherein the at least two recognition records each further comprises corresponding recognition time, and the apparatus (140) further comprises:
a record determining module, configured to determine (602) whether the first recognition record file comprises an expired record before the monitored region (41) is determined based on the coordinates comprised in the at least two recognition records in the first recognition record file, wherein the expired record is a record having an interval, which is between the corresponding recognition time and current time, greater than a preset time interval; and
a second deletion module, configured to delete (603) the expired record from the first recognition record file.

8. A computer readable storage medium (932), wherein the storage medium stores instructions, wherein the instructions, when being executed by a processor (922) of a recognition device (140), cause the processor (922) to implement the image recognition method according to any one of claims 1 to 3.

## Patentansprüche

1. Bilderkennungsverfahren, umfassend:
Erhalten (201), durch ein Erkennungsgerät (140), einer ersten Erkennungsdatensatzdatei, wobei die erste Erkennungsdatensatzdatei zumindest zwei Erkennungsdatensätze umfasst, die jeweils Koordinaten umfassen, die indikativ sind für ein spezifiziertes Ereignis in einem überwachten Bild, das von einem Überwachungsgerät (120) vor einem Zeitmoment fotografiert wurde, in einem Fall dass das spezifizierte Ereignis von dem überwachten Bild erkannt wird;
nachdem ein voreingestelltes Zeitintervall verstrichen ist, Erhalten (604), durch das Erkennungsgerät (140), einer zweiten Erkennungsdatensatzdatei, wobei jeder Erkennungsdatensatz, der in der zweiten Erkennungsdatensatzdatei enthalten ist, Koordinaten umfasst, die indikativ sind für das spezifizierte Ereignis in einem Teil von überwachten Bildern, die durch das Überwachungsgerät (120) fotografiert wurden, in einem Fall, dass das spezifizierte Ereignis von den gesamten Koordinatenbereichen (70) (Absatz 76) in dem Teil von überwachten Bildern erkannt wird, und der Teil von überwachten Bildern andere Bilder sind als das überwachte Bild, das zu den zumindest zwei Erkennungsdatensätzen in der ersten Erkennungsdatensatzdatei korrespondiert;
Berechnen (605), durch das Erkennungsgerät (140), eines Anpassungsgrades zwischen der ersten Erkennungsdatensatzdatei und der zweiten Erkennungsdatensatzdatei, wobei der Anpassungsgrad indikativ ist für ein Ähnlichkeitsniveau zwischen einem ersten Bereich (71) und einem zweiten Bereich (72), wobei der erste Bereich (71) ein Bereich ist, der zu den Koordinaten korrespondiert, die in den zumindest zwei Erkennungsdatensätzen in der ersten Erkennungsdatensatzdatei enthalten sind, und der zweite Bereich (72) ein Bereich ist, der zu den Koordinaten korrespondiert, die in den Erkennungsdatensätzen in der zweiten Erkennungsdatensatzdatei enthalten sind; und
Aktualisieren (607), durch das Erkennungsgerät (140), der ersten Erkennungsdatensatzdatei, wenn der Anpassungsgrad niedriger ist als ein voreingestellter Anpassungsgradschwellenwert, auf der Grundlage der Erkennungsdatensätze, die in der zweiten Erkennungsdatensatzdatei enthalten sind;
Bestimmen (202), durch das Erkennungsgerät (140), eines überwachten Bereichs (41) auf der Grundlage der Koordinaten, die in den zumindest zwei Erkennungsdatensätzen in der ersten Erkennungsdatensatzdatei enthalten sind, wobei der überwachte Bereich ein Teil des Bereichs des überwachten Bildes ist, das durch das Überwachungsgerät (120) fotografiert wurde;
Durchführen einer Erkennung (203), durch das Erkennungsgerät (140), beim Durchführen einer Erkennung an zumindest einem Rahmen eines überwachten Bildes, das nachfolgend von dem Überwachungsgerät nach dem Zeitmoment aufgenommen wurde, an einem Bild, das sich in dem überwachten Bereich (41) in dem zumindest einen Rahmen des überwachten Bildes befindet;
Berechnen, durch das Erkennungsgerät (140), einer Ereigniswahrscheinlichkeit, dass ein aus dem überwachten Bild erkanntes Ereignis das spezifizierte Ereignis ist;
Erzeugen (205), durch das Erkennungsgerät (140), eines Erkennungsdatensatzes des Ereignisses als Reaktion darauf, dass die Ereigniswahrscheinlichkeit höher als ein voreingestellter Wahrscheinlichkeitsschwellenwert ist, auf der Grundlage von Koordinaten, die indikativ sind für das Ereignis in dem überwachten Bild; und
Hinzufügen (205), durch das Erkennungsgerät (140), des Erkennungsdatensatzes des Ereignisses zu der ersten Erkennungsdatensatzdatei.

2. Verfahren nach Anspruch 1, wobei das Bestimmen (202), durch das Erkennungsgerät (140), eines überwachten Bereichs (41) entsprechend den Koordinaten, die in den zumindest zwei Erkennungsdatensätzen in der ersten Erkennungsdatensatzdatei enthalten sind, umfasst:
Bestimmen, durch das Erkennungsgerät (140), von Zielkoordinaten aus den Koordinaten, die in den zumindest zwei Erkennungsdatensätzen in der ersten Erkennungsdatensatzdatei enthalten sind, wobei die Zielkoordinaten Koordinaten sind, deren Konfidenzniveau höher als ein voreingestellter Konfidenzniveauschwellenwert ist, und wobei das Konfidenzniveau indikativ ist für eine Wahrscheinlichkeit, das spezifizierte Ereignis an korrespondierenden Koordinaten wieder zu erkennen; und
Bestimmen, durch das Erkennungsgerät (140), eines kleinsten Bereichs, der die Zielkoordinaten umgibt, als den überwachten Bereich.

3. Verfahren nach Anspruch 1 oder 2, wobei die zumindest zwei Erkennungsdatensätze jeweils des Weiteren einen korrespondierenden Erkennungszeitpunkt umfassen, und vor dem Bestimmen eines überwachten Bereichs auf der Grundlage der Koordinaten, die in den zumindest zwei Erkennungsdatensätzen in der ersten Erkennungsdatensatzdatei enthalten sind, das Verfahren des Weiteren umfasst:
Bestimmen (602), durch das Erkennungsgerät (140), ob die erste Erkennungsdatensatzdatei einen abgelaufenen Datensatz umfasst, wobei der abgelaufene Datensatz ein Datensatz ist, der ein Intervall aufweist, das zwischen dem korrespondierenden Erkennungszeitpunkt und dem aktuellen Zeitpunkt liegt und das größer als ein voreingestelltes Zeitintervall ist; und
Löschen (603), durch das Erkennungsgerät (140), des abgelaufenen Datensatzes aus der ersten Erkennungsdatensatzdatei.

4. Bilderkennungsvorrichtung (140), umfassend:
ein erstes Dateierhaltemodul (801), das konfiguriert zum Erhalten einer ersten Erkennungsdatensatzdatei, wobei die erste Erkennungsdatensatzdatei zumindest zwei Erkennungsdatensätze umfasst, die jeweils Koordinaten umfassen, die indikativ sind für ein spezifiziertes Ereignis in einem überwachten Bild, das von einem Überwachungsgerät vor einem Zeitmoment fotografiert wurde, in einem Fall, dass das spezifizierte Ereignis von dem überwachten Bild erkannt wird;
ein zweites Dateierhaltemodul, das konfiguriert zum Erhalten, nachdem ein voreingestelltes Zeitintervall verstrichen ist, einer zweite Erkennungsdatensatzdatei, bevor ein Bereichsbestimmungsmodul (802) den überwachten Bereich auf der Grundlage der Koordinaten bestimmt, die in den zumindest zwei Erkennungsdatensätzen in der ersten Erkennungsdatensatzdatei enthalten sind; wobei jeder Erkennungsdatensatz, der in der zweiten Erkennungsdatensatzdatei enthalten ist, Koordinaten umfasst, die indikativ sind für das spezifizierte Ereignis in einem Teil der überwachten Bilder, die von dem Überwachungsgerät fotografiert wurden, in einem Fall, dass das spezifizierte Ereignis aus dem gesamten Koordinatenbereich (70) des Teils der überwachten Bilder erkannt wird, und der Teil der überwachten Bilder andere Bilder sind als das überwachte Bild, das zu den zumindest zwei Erkennungsdatensätzen in der ersten Erkennungsdatensatzdatei korrespondiert;
ein Anpassungsgradberechnungsmodul, das konfiguriert ist zum Berechnen (605) eines Anpassungsgrades zwischen den Koordinaten, die in den zumindest zwei Erkennungsdatensätzen in der ersten Erkennungsdatensatzdatei enthalten sind, und den Koordinaten, die in den Erkennungsdatensätzen in der zweiten Erkennungsdatensatzdatei enthalten sind, wobei der Anpassungsgrad indikativ ist für ein Ähnlichkeitsniveau zwischen einem ersten Bereich (71) und einem zweiten Bereich (72), wobei der erste Bereich (71) ein Bereich ist, der zu den Koordinaten korrespondiert, die in den zumindest zwei Erkennungsdatensätzen in der ersten Erkennungsdatensatzdatei enthalten sind, und der zweite Bereich (72) ein Bereich ist, der zu den Koordinaten korrespondiert, die in den Erkennungsdatensätzen in der zweiten Erkennungsdatensatzdatei enthalten sind; und
ein Aktualisierungsmodul, das konfiguriert ist zum: Aktualisieren (607) der ersten Erkennungsdatensatzdatei auf der Grundlage der Erkennungsdatensätze, die in der zweiten Erkennungsdatensatzdatei enthalten sind, wenn der Anpassungsgrad niedriger ist als ein voreingestellter Anpassungsgradschwellenwert;
das Bereichsbestimmungsmodul (802), das konfiguriert zum Bestimmen (202) eines überwachten Bereichs auf der Grundlage der Koordinaten, die in den zumindest zwei Erkennungsdatensätzen in der ersten Erkennungsdatensatzdatei enthalten sind, wobei der überwachte Bereich ein Teil des Bereichs des überwachten Bildes ist, das durch das Überwachungsgerät fotografiert wurde;
ein Erkennungsmodul (803), das konfiguriert ist zum Durchführen einer Erkennung an einem Bild, das sich in dem überwachten Bereich in zumindest einem Rahmen des überwachten Bildes befindet, beim Durchführen einer Erkennung an dem zumindest einem Rahmen eines überwachten Bildes, das nachfolgend von dem Überwachungsgerät nach dem Zeitmoment aufgenommen wurde;
ein Wahrscheinlichkeitsberechnungsmodul, das konfiguriert ist zum Berechnen einer Ereigniswahrscheinlichkeit, dass ein aus dem überwachten Bild erkanntes Ereignis das spezifizierte Ereignis ist, für jeden des zumindest einen Rahmens des überwachten Bildes;
ein Datensatzerzeugungsmodul, das konfiguriert ist zum Erzeugen (205) eines Erkennungsdatensatzes des Ereignisses auf der Grundlage von Koordinaten, die indikativ sind für das Ereignis in dem überwachten Bild, wenn die Ereigniswahrscheinlichkeit höher als ein voreingestellter Wahrscheinlichkeitsschwellenwert ist; und
ein Hinzufügungsmodul, das konfiguriert ist zum Hinzufügen (205) des Erkennungsdatensatzes des Ereignisses zu der ersten Erkennungsdatensatzdatei.

5. Vorrichtung (140) nach Anspruch 4, wobei das Bereichsbestimmungsmodul (803) umfasst:
eine Koordinatenbestimmungseinheit, die konfiguriert ist zum Bestimmen von Zielkoordinaten aus den Koordinaten, die in den zumindest zwei Erkennungsdatensätzen in der ersten Erkennungsdatensatzdatei enthalten sind, wobei die Zielkoordinaten Koordinaten sind, deren Konfidenzniveau höher als ein voreingestellter Konfidenzniveauschwellenwert ist, und wobei das Konfidenzniveau indikativ ist für eine Wahrscheinlichkeit, das spezifizierte Ereignis an korrespondierenden Koordinaten wieder zu erkennen; und
eine Bereichsbestimmungseinheit, die konfiguriert ist zum Bestimmen eines kleinsten Bereichs, der die Zielkoordinaten umgibt, als den überwachten Bereich.

6. Vorrichtung nach Anspruch 5, wobei die Vorrichtung des Weiteren umfasst:
ein Anzeigemodul (160), das konfiguriert ist zum Anzeigen des überwachten Bildes, wenn die Ereigniswahrscheinlichkeit höher ist als der voreingestellte Wahrscheinlichkeitsschwellenwert;
ein Antwortempfangsmodul, das konfiguriert ist zum Empfangen einer für das überwachte Bild gesendeten Ereignisverweigerungsantwort, wobei die Ereignisverweigerungsantwort indikativ dafür ist, dass das Ereignis nicht das spezifizierte Ereignis ist; und
ein erstes Löschmodul, das konfiguriert ist zum Löschen des Erkennungsdatensatzes des Ereignisses aus der ersten Erkennungsdatensatzdatei.

7. Vorrichtung (140) nach Anspruch 5 oder 6, wobei die zumindest zwei Erkennungsdatensätze jeweils des Weiteren einen korrespondierenden Erkennungszeitpunkt umfassen, und die Vorrichtung (140) des Weiteren umfasst:
ein Datensatzbestimmungsmodul, das konfiguriert ist zum Bestimmen (602), ob die erste Erkennungsdatensatzdatei einen abgelaufenen Datensatz umfasst, bevor der überwachte Bereich (41) auf der Grundlage der Koordinaten, die in den zumindest zwei Erkennungsdatensätzen in der ersten Erkennungsdatensatzdatei enthalten sind, bestimmt wird, wobei der abgelaufene Datensatz ein Datensatz ist, der ein Intervall aufweist, das zwischen dem korrespondierenden Erkennungszeitpunkt und dem aktuellen Zeitpunkt liegt und das größer als ein voreingestelltes Zeitintervall ist; und
ein zweites Löschmodul, das konfiguriert ist zum Löschen (603) des abgelaufenen Datensatzes aus der ersten Erkennungsdatensatzdatei.

8. Computerlesbares Speichermedium (932), wobei das Speichermedium Anweisungen speichert, wobei die Anweisungen, wenn sie von einem Prozessor (922) eines Erkennungsgerätes (140) ausgeführt werden, den Prozessor (922) veranlassen, das Bilderkennungsverfahren nach einem der Ansprüche 1 bis 3 zu implementieren.

## Revendications

1. Procédé de reconnaissance d'image, comprenant:
obtenir (201), par un dispositif de reconnaissance (140), un premier fichier d'enregistrement de reconnaissance, dans lequel le premier fichier d'enregistrement de reconnaissance comprend au moins deux enregistrements de reconnaissance comprenant chacun des coordonnées indicatives d'un événement spécifié dans une image surveillée photographiée par un dispositif de surveillance (120) avant un instant temporel dans un cas où l'événement spécifié est reconnu à partir de l'image surveillée;
après qu'un intervalle de temps prédéfini s'est écoulé, obtenir (604), par le dispositif de reconnaissance (140), un deuxième fichier d'enregistrement de reconnaissance, dans lequel chaque enregistrement de reconnaissance compris dans le deuxième fichier d'enregistrement de reconnaissance comprend des coordonnées indicatives de l'événement spécifié dans une partie d'images surveillées photographiées par le dispositif de surveillance (120), dans un cas où l'événement spécifié est reconnu à partir de l'ensemble des régions de coordonnées (70) (paragraphe 76) dans la partie des images surveillées, et la partie d'images surveillées sont des images autres que l'image surveillée correspondent auxdits au moins deux enregistrements de reconnaissance dans le premier fichier d'enregistrement de reconnaissance;
calculer (605), par le dispositif de reconnaissance (140), un degré d'ajustement entre le premier fichier d'enregistrement de reconnaissance et le deuxième fichier d'enregistrement de reconnaissance, le degré d'ajustement indiquant un niveau de similarité entre une première région (71) et une deuxième région (72 ), dans lequel la première région (71) est une région correspondant aux coordonnées comprises dans lesdits au moins deux enregistrements de reconnaissance dans le premier fichier d'enregistrement de reconnaissance, et la deuxième région (72) est une région correspondant aux coordonnées comprises dans les enregistrements de reconnaissance dans le deuxième fichier d'enregistrement de reconnaissance; et
mettre à jour (607), par le dispositif de reconnaissance (140), lorsque le degré d'ajustement est inférieur à un seuil de degré d'ajustement prédéfini, le premier fichier d'enregistrement de reconnaissance sur la base des enregistrements de reconnaissance compris dans le deuxième fichier d'enregistrement de reconnaissance;
déterminer (202), par le dispositif de reconnaissance (140), une région surveillée (41) sur la base des coordonnées comprises dans lesdits au moins deux enregistrements de reconnaissance dans le premier fichier d'enregistrement de reconnaissance, la région surveillée faisant partie d'une région de l'image surveillée photographiée par le dispositif de surveillance (120);
effectuer une reconnaissance (203), par le dispositif de reconnaissance (140) lors de l'exécution d'une reconnaissance sur au moins une trame d'une image surveillée photographiée ultérieurement par le dispositif de surveillance après l'instant temporel, sur une image située dans la région surveillée (41) dans ladite au moins une trame de l'image surveillée;
calculer, par le dispositif de reconnaissance (140), une probabilité d'événement selon laquelle un événement reconnu à partir de l'image surveillée est l'événement spécifié;
générer (205), par le dispositif de reconnaissance (140), en réponse au fait que la probabilité d'événement est supérieure à un seuil de probabilité prédéfini, un enregistrement de reconnaissance de l'événement, sur la base de coordonnées indicatives de l'événement dans l'image surveillée; et
ajouter (205), par le dispositif de reconnaissance (140), l'enregistrement de reconnaissance de l'événement au premier fichier d'enregistrement de reconnaissance.

2. Procédé selon la revendication 1, dans lequel la détermination (202), par le dispositif de reconnaissance (140), d'une région surveillée (41) en fonction des coordonnées comprises dans lesdits au moins deux enregistrements de reconnaissance dans le premier fichier d'enregistrement de reconnaissance comprend:
déterminer, par le dispositif de reconnaissance (140), des coordonnées cibles à partir des coordonnées comprises dans lesdits au moins deux enregistrements de reconnaissance dans le premier fichier d'enregistrement de reconnaissance, les coordonnées cibles étant des coordonnées dont le niveau de confiance est supérieur à un seuil de niveau de confiance prédéfini, et dans lequel le niveau de confiance indique la probabilité de reconnaître à nouveau l'événement spécifié à des coordonnées correspondantes; et
déterminer, par le dispositif de reconnaissance (140), une plus petite région entourant les coordonnées cibles en tant que région surveillée.

3. Procédé selon la revendication 1 ou 2, dans lequel lesdits au moins deux enregistrements de reconnaissance comprennent chacun en outre un temps de reconnaissance correspondant, et avant de déterminer une région surveillée sur la base des coordonnées comprises dans lesdits au moins deux enregistrements de reconnaissance dans le premier fichier d'enregistrement de reconnaissance, le procédé comprend en outre:
déterminer (602), par le dispositif de reconnaissance (140), si le premier fichier d'enregistrement de reconnaissance comprend un enregistrement expiré, l'enregistrement expiré étant un enregistrement ayant un intervalle qui se situe entre l'heure de reconnaissance correspondante et l'heure actuelle et est supérieur à un intervalle de temps prédifini; et
supprimer (603), par le dispositif de reconnaissance (140), l'enregistrement expiré du premier fichier d'enregistrement de reconnaissance.

4. Dispositif de reconnaissance d'image (140), comprenant:
un premier module d'obtention de fichier (801) configuré pour obtenir un premier fichier d'enregistrement de reconnaissance, le premier fichier d'enregistrement de reconnaissance comprenant au moins deux enregistrements de reconnaissance comprenant chacun des coordonnées indicatives d'un événement spécifié dans une image surveillée photographiée par un dispositif de surveillance avant un instant temporel dans un cas où l'événement spécifié est reconnu à partir de l'image surveillée;
un deuxième module d'obtention de fichier configuré pour obtenir, après qu'un intervalle de temps prédéfini s'est écoulé, un deuxième fichier d'enregistrement de reconnaissance avant qu'un module de détermination de région (802) ne détermine la région surveillée sur la base des coordonnées comprises dans lesdits au moins deux enregistrements de reconnaissance dans le premier fichier d'enregistrement de reconnaissance ; dans lequel chaque enregistrement de reconnaissance compris dans le deuxième fichier d'enregistrement de reconnaissance comprend des coordonnées indicatives de l'événement spécifié dans une partie des images surveillées photographiées par le dispositif de surveillance, dans un cas où l'événement spécifié est reconnu à partir de l'ensemble de la région de coordonnées (70) de la partie des images surveillées, et la partie des images surveillées sont des images autres que l'image surveillée correspondant auxdits au moins deux enregistrements de reconnaissance dans le premier fichier d'enregistrement de reconnaissance;
un module de calcul de degré d'ajustement configuré pour calculer (605) un degré d'ajustement entre les coordonnées comprises dans lesdits au moins deux enregistrements de reconnaissance dans le premier fichier d'enregistrement de reconnaissance et les coordonnées comprises dans les enregistrements de reconnaissance dans le deuxième fichier d'enregistrement de reconnaissance, dans lequel le degré d'ajustement est indicatif d'un niveau de similarité entre une première région (71) et une deuxième région (72), la première région (71) étant une région correspondant aux coordonnées comprises dans lesdits au moins deux enregistrements de reconnaissance dans le premier fichier d'enregistrement de reconnaissance, et la deuxième région (72) est une région correspondant aux coordonnées comprises dans les enregistrements de reconnaissance dans le deuxième enregistrement de reconnaissance; et
un module de mise à jour configuré pour: mettre à jour (607) le premier fichier d'enregistrement de reconnaissance sur la base des enregistrements de reconnaissance compris dans le deuxième fichier d'enregistrement de reconnaissance lorsque le degré d'ajustement est inférieur à un seuil de degré d'ajustement prédéfini;
le module de détermination de région (802) configuré pour déterminer une région surveillée sur la base des coordonnées comprises dans lesdits au moins deux enregistrements de reconnaissance dans le premier fichier d'enregistrement de reconnaissance, la région surveillée faisant partie d'une région de l'image surveillée photographiée par le dispositif de surveillance;
un module de reconnaissance (803) configuré pour effectuer une reconnaissance sur une image située dans la région surveillée dans au moins une trame d'image surveillée lors de l'exécution d'une reconnaissance sur ladite au moins une trame d'image surveillée qui est ensuite photographiée par le dispositif de surveillance après l'instant temporel;
un module de calcul de probabilité configuré pour calculer une probabilité d'événement selon laquelle un événement reconnu à partir de l'image surveillée est l'événement spécifié, pour chacune de ladite au moins une trame d'image surveillée;
un module de génération d'enregistrement configuré pour générer (205) un enregistrement de reconnaissance de l'événement sur la base de coordonnées indicatives de l'événement dans l'image surveillée lorsque la probabilité d'événement est supérieure à un seuil de probabilité prédéfini; et
un module d'ajout configuré pour ajouter (205) l'enregistrement de reconnaissance de l'événement au premier fichier d'enregistrement de reconnaissance.

5. Dispositif (140) selon la revendication 4, dans lequel le module de détermination de région (803) comprend:
une unité de détermination de coordonnées configurée pour déterminer des coordonnées cibles à partir des coordonnées comprises dans lesdits au moins deux enregistrements de reconnaissance dans le premier fichier d'enregistrement de reconnaissance, les coordonnées cibles étant des coordonnées dont le niveau de confiance est supérieur à un seuil de niveau de confiance prédéfini, et dans lequel le niveau de confiance indique une probabilité de reconnaître à nouveau l'événement spécifié à des coordonnées correspondantes; et
une unité de détermination de région configurée pour déterminer une plus petite région entourant les coordonnées cibles, en tant que région surveillée.

6. Dispositif selon la revendication 5, dans lequel le dispositif comprend en outre:
un module d'affichage (160) configuré pour afficher l'image surveillée lorsque la probabilité d'événement est supérieure au seuil de probabilité prédéfini;
un module de réception de réponse configuré pour recevoir une réponse de refus d'événement envoyée pour l'image surveillée, la réponse de refus d'événement indiquant que l'événement n'est pas l'événement spécifié; et
un premier module de suppression configuré pour supprimer l'enregistrement de reconnaissance de l'événement du premier fichier d'enregistrement de reconnaissance.

7. Dispositif (140) selon la revendication 5 ou 6, dans lequel lesdits au moins deux enregistrements de reconnaissance comprennent chacun en outre un temps de reconnaissance correspondant, et le dispositif (140) comprend en outre:
un module de détermination d'enregistrement configuré pour déterminer (602) si le premier fichier d'enregistrement de reconnaissance comprend un enregistrement expiré avant que la région surveillée (41) ne soit déterminée sur la base des coordonnées comprises dans lesdits au moins deux enregistrements de reconnaissance dans le premier fichier d'enregistrement de reconnaissance, dans lequel l'enregistrement expiré est un enregistrement ayant un intervalle qui se situe entre l'heure de reconnaissance correspondante et l'heure actuelle et est supérieur à un intervalle de temps prédéfini; et
un deuxième module de suppression configuré pour supprimer (603) l'enregistrement expiré du premier fichier d'enregistrement de reconnaissance.

8. Support de stockage lisible par ordinateur (932), dans lequel le support de stockage stocke des instructions, dans lequel les instructions, lorsqu'elles sont exécutées par un processeur (922) d'un dispositif de reconnaissance (140), amènent le processeur (922) à mettre en oeuvre le procédé de reconnaissance d'image selon l'une quelconque des revendications 1 à 3.
